# EUROPÄISCHE PATENTSCHRIFT

(11) **EP 2 344 559 B1**
(45) Veröffentlichungstag und Bekanntmachung des Hinweises auf die Patenterteilung: **01.01.2014**
(21) Anmeldenummer: 09783763.7
(22) Anmeldetag: 06.10.2009
(51) Int. Cl.: C08F 293/00, C08F 2/38, C09D 153/00, C09J 153/00, C08F 6/02, C08F 8/26, C08F 8/34, C08L 53/00

(54) **VERFAHREN ZUR HERSTELLUNG VON ABA-TRIBLOCKCOPOLYMEREN MIT EINEM BIMODALEN B-BLOCK**
METHOD FOR PRODUCING ABA-TRIBLOCK COPOLYMERS WITH A BIMODAL B-BLOCK
PROCÉDÉ DE FABRICATION DE COPOLYMÈRES TRIBLOCS ABA AVEC UN BLOC B BIMODAL

(30) Priorität: 12.11.2008 DE 102008043668
(43) Veröffentlichungstag der Anmeldung: 20.07.2011
(73) Patentinhaber: Evonik Röhm GmbH, 64293 Darmstadt (DE); Henkel AG & Co. KGaA, 40191 Düsseldorf (DE)
(72) Erfinder: BALK, Sven, 60594 Frankfurt (DE); KAUTZ, Holger, 45721 Haltern am See / Sythen (DE); FENGLER, Stephan, 60488 Frankfurt (DE); TRÖMER, Christine, 63546 Hammersbach (DE); MÄRZ, Monika, 63755 Alzenau (DE); ZANDER, Lars, 41569 Rommerskirchen (DE); LÜCKERT, Jens, 30890 Barsinghausen (DE); KLEIN, Johann, 40593 Düsseldorf (DE); MÖLLER, Thomas, 40593 Düsseldorf (DE); ERB, Volker, 40595 Düsseldorf (DE)
(86) Internationale Anmeldenummer: PCT/EP2009/062933
(87) Internationale Veröffentlichungsnummer: WO 2010/054898

(56) Entgegenhaltungen:
- EP-A2- 1 637 550
- WO-A1-2007/033887
- WO-A1-2008/012116
- US-A- 6 087 451
- ANNE-VALÉRIE RUZETTE ET AL.: "Molecular Disorder and Mesoscopic Order in Polydisperse Acrylic Block Copolymers Prepared by Controlled Radical Polymerization" MACROMOLECULES, Bd. 39, Nr. 17, 22. Juli 2006 (2006-07-22) , Seiten 5804-5814, XP002556195
- PARIS R ET AL: "Synthesis of crosslinkable ABA triblock copolymers based on allyl methacrylate by atom transfer radical polymerization" EUROPEAN POLYMER JOURNAL, PERGAMON PRESS LTD. OXFORD, GB, Bd. 44, Nr. 5, 1. Mai 2008 (2008-05-01), Seiten 1403-1413, XP022623137 ISSN: 0014-3057 [gefunden am 2008-02-15]

## Beschreibung

Die Erfindung betrifft ein kontrolliertes Polymerisationsverfahren zur Herstellung von ABA-Triblockcopolymeren auf (Meth)acrylatbasis mit A-Blöcken, die eine enge, monomodale Molekulargewichtsverteilung aufweisen, und einem B-Block der eine bimodale Molekulargewichtsverteilung aufweist, sowie deren Verwendung zum Beispiel als Bindemittel in Klebstoffen oder Dichtmassen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.
Polymere können beispielsweise über ionische Polymerisationsverfahren oder durch Polykondensation bzw. -addition hergestellt werden. In diesen Verfahren ist die Darstellung endgruppenfunktionalisierter Produkte unproblematisch. Dabei ist jedoch ein gezielter Molekulargewichtsaufbau problematisch.

Polymere, die durch einen freiradikalischen Polymerisationsprozess gewonnen werden, zeigen Molekularitätsindizes von deutlich über 1,8. Es liegen bei einer solchen Molekulargewichtsverteilung also zwangsläufig sehr kurzkettige sowie langkettige Polymere im Gesamtprodukt vor. Die kurzkettigen Polymerketten zeigen in Schmelze oder Lösung eine verringerte Viskosität und in einer Polymermatrix eine erhöhte Mobilität gegenüber langkettigen Bestandteilen. Dies führt zum einen zu einer verbesserten Verarbeitbarkeit solcher Polymere und zum anderen zu einer gesteigerten Verfügbarkeit von polymergebundenen funktionellen Gruppen in einer Polymermasse oder Beschichtung.
Langkettige Nebenprodukte führen dagegen zu einer überproportionalen Viskositätszunahme der Polymerschmelze bzw. -lösung. Auch ist die Migration solcher Polymere in einer Matrix deutlich vermindert.

Nachteil von freiradikalisch hergestellten Bindemitteln dieser Art ist jedoch eine statistische Verteilung von funktionellen Gruppen in der Polymerkette. Außerdem ist über eine freiradikalische Polymerisationsmethode weder eine hart-weich-hart Triblockarchitektur noch die gezielte Synthese einzelner Polymerblöcke mit engen Molekulargewichtsverteilungen möglich.
Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert.
Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation.
Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ = 10.000-120.000 g/mol. Ein besonderer Vorteil dabei ist, dass das Molekulargewicht regelbar ist. Als lebende Polymerisation gestattet sie ferner den gezielten Aufbau von Polymerarchitekturen wie beispielsweise statistische Copolymere oder auch Block-Copolymer-Strukturen. Kontrolliert radikalische Methoden eignen sich insbesondere auch zur gezielten Funktionalisierung von Vinylpolymeren. Insbesondere von Interesse sind Funktionalisierungen an den Kettenenden (so genannte Telechele) bzw. in der Nähe der Kettenenden. Im Gegensatz dazu ist die gezielte Funktionalisierung am Kettenende bei der radikalischen Polymerisation nahezu unmöglich.
Bindemittel mit definiertem Polymerdesign können durch eine kontrollierte Polymerisationsmethode, z.B. in Form der atom transfer radical polymerisation, zur Verfügung gestellt werden. So sind ABA Triblockcopolymere beschrieben, die über einen unfunktionalisierten B-Block und funktionalisierte A-Außenblöcke verfügen. In EP 1 475 397 sind solche Polymere mit OH-Gruppen, in WO 2007/033887 mit olefinischen, in WO 2008/012116 mit Amin- und in der noch nicht veröffentlichten DE 102008002016 mit Silylgruppen beschrieben. Alle in diesen Schriften beschriebenen Polymere weisen jedoch eine explizit enge Molekulargewichtsverteilung auf.
Über die so genannte kontrollierte Polymerisationsverfahren sind keine Verfahren beschrieben, mit denen es möglich wäre, Polymere herzustellen, die einzelne oder mehrere Blöcke mit gezielt breiter Molekulargewichtsverteilung aufweisen.
Eine bereits etablierte Methode ist die Endgruppenfunktionalisierung eines Poly(meth)acrylats mit olefinischen Gruppen und die anschließende Hydrosilylierung dieser Gruppen. Solche Verfahren finden sich unter anderem in EP 1 024 153,
EP 1 085 027 und EP 1 153 942. Dabei handelt es sich jedoch nicht um Blockcopolymere und es wird explizit auf eine Molekulargewichtsverteilung des Produktes kleiner 1,6 hingewiesen. Ein weiterer Nachteil dieser Produkte gegenüber Polymeren mit mehrfach funktionalisierten Außenblöcken ist die höhere Wahrscheinlichkeit, einseitig nicht funktionalisierte Produkte zu erhalten. Durch den gegenüber den erfindungsgemäßen Polymeren jeweils resultierenden geringeren Funktionalisierungsgrad erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit entgegenwirkt.

Neben Telechelen und Blockstrukturen stellen auch ATRP-synthesisierte - z.B. silylhaltige - (Meth)acrylatcopolymere mit einer statistischen Verteilung und einer engen Molekulargewichtsverteilung eine Alternative dar. Nachteil solcher Bindemittel ist eine engmaschige Vernetzung. Auch haben solche Bindemittelsysteme aufgrund der engen Molekulargewichtsverteilung weder die Vorteile besonders langer, noch besonders kurzer in System enthaltener Polymerketten.
Neben der ATRP kommen zur Synthese funktionalisierter Polymerarchitekuren auch andere Methoden zum Einsatz. Eine weitere relevante Methode soll im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:

Bei der anionischen Polymerisation können Bimodalitäten auftreten. Diese Polymersiationsverfahren können aber nur bestimmte Funktionalisierungen erzeugen. Für die ATRP sind bimodale Verteilungen für Systeme beschrieben. Die Bimodalität dieser Polymere ergibt sich jedoch jeweils aus dem Vorliegen von Blockcopolymeren einerseits und nicht umgesetzten Makroinitiatoren andererseits. Damit liegen also keine bimodalen, gleichartigen Polymere vor, sondern es sind Mischungen von Blockcopolymeren und andersartig aufgebauten Oligomeren. Ein gezielter Aufbau von Polymeren mit einer bimodalen Molekulargewichtsverteilung ist nicht beschrieben.

In EP 1 637 550 wird die Synthese von MMA-nBA-MMA-Triblockcopolymeren zur Verwendung in thermoplastischen Elastomeren dargelegt. Dem Fachmann ist bekannt, dass solche Materialien im besten Fall in allen Blöcken sehr enge Molekulargewichtsverteilungen aufweisen.

In Ruzette et al. (Macromolecules, 39, 17, S.5804-14, 2006) werden monomodal verteilte Triblockcopolymere mit drei jeweils breit verteilten Polymerblöcken beschrieben. Dieses Ergebnis ist auf eine nicht optimale Versuchsführung zurückzuführen und nicht als gezielt entwickeltes Verfahren zur Herstellung von breit verteilten Blockcopolymeren beschrieben.

In Paris et al. (European Polymer Journal, 44, 5, S.1403-13, 2008) werden ABA-Triblockcopolymere mit A-Blöcken aus Allylmethacrylat vorgestellte. Hier weisen die B-Blöcke eine monomodale enge Molekulargewichtsverteilung auf, während die A-Blöcke bimodal, breit und verzweigt sind.

### Aufgabe

Eine neue Stufe der Entwicklung sind die im Folgenden beschriebenen Triblockcopolymere.
Aufgabe war es, ein Verfahren zur Synthese von Triblockpolymeren der Struktur ABA aus funktionalisierten Poly(meth)acrylaten zur Verfügung zu stellen. Dabei sollen diese aus A-Blöcken mit in sich enger Molekulargewichtsverteilung von weniger als 1,6 und B-Blöcken, die eine bimodale Molekulargewichtsverteilung mit zum einen langen Polymerketten und zum anderen kurzen Polymerketten aufweist, zusammengesetzt sein. Insbesondere besteht der Bedarf an ABA-Triblockcopolymeren, deren B-Blöcke mit bimodalen Molekulargewichtsverteilung einen Polydispersitätsindex von mindestens 1,8 aufweisen und ABA-Triblockcopolymere diese B-Blöcke enthaltend, die insgesamt einen Polydispersitätsindex von mindestens 1,8 aufweisen.
Dabei sind ABA-Triblockcopolymere mit Pentablockcopolymeren der Zusammensetzung ACBCA bzw. CABAC gleichzusetzen.

Eine weitere Aufgabe bestand darin, ABA-Triblockcopolymere bzw. Pentablockcopolymere der Zusammensetzung ACBCA bzw. CABAC dergestalt zur Verfügung zu stellen, dass diese Polymere ausschließlich in den A-Blöcken funktionelle Gruppen tragen. Insbesondere ist Gegenstand dieser Erfindung ein Verfahren zur gezielten Funktionalisierung der A-Blöcke durch den Einbau geeigneter ungesättigter Monomere, die eine zusätzliche funktionelle Gruppe aufweisen.

Aufgabe der vorliegenden Erfindung ist es daher unter anderem auch ein Bindemittel für Klebmassen bzw. Dichtmassen zur Verfügung zu stellen, das eine Blockstruktur aufweist, gezielt nur in einem Typ von Blöcken funktionalisiert ist und kurze, viskositätserniedrigende und gleichzeitig lange, die Adhäsion verbessernde Ketten enthält.

### Lösung

Die Aufgabe wurde gelöst durch das zur Verfügung Stellen eines neuen Polymerisationsverfahrens, das auf der atom transfer radical polymerization (ATRP) basiert.
Es wird ein Verfahren zur Herstellung von Blockcopolymeren bereitgestellt, dadurch gekennzeichnet, dass es sich um eine sequentiell durchgeführte atom transfer radical polymerization (ATRP) handelt, bei der ein bifunktioneller Initiator zur Polymerisationslösung in mehreren Portionen zugegeben wird, und dass das Blockcopolymer insgesamt einen Polydispersitätsindex größer 1,8 und der Blocktyp B allein ebenfalls einen Polydispersitätsindex größer 1,8 aufweist. Dabei wird das Polymer mit einer bimodalen Molekulargewichtsverteilung durch ein Verfahren mit einer zweimaligen Initiierung hergestellt.
Unter einer bimodalen Molekulargewichtsverteilung eines Polymers oder einer Mischung aus Polymeren versteht man erfindungsgemäß eine Gesamtmolekulargewichtsverteilung, die sich aus zwei verschiedenen einzelnen Molekulargewichtsverteilungen mit unterschiedlichen mittleren Molekulargewichten Mn und Mw zusammensetzt. Dabei können die beiden Molekulargewichtsverteilungen vollständig voneinander getrennt sein, sich insofern überlappen, dass sie zwei unterscheidbare Maxima aufweisen oder soweit überlappen, dass es zu einer Schulterbildung in der Gesamtmolekulargewichtsverteilung kommt. Die Gesamtmolekulargewichtsverteilung wird mittels Gelpermeationschromatographie bestimmt.

Die Blockcopolymere werden mittels eines sequentiellen Polymerisationsverfahrens hergestellt. Das heißt, dass die Monomermischung zur Synthese der Blöcke beispielsweise A erst nach einer Polymerisationszeit t₂ zu dem System gegeben werden, wenn die Monomermischung zur Synthese des Blocks beispielsweise B zu mindestens 90%, bevorzugt zu mindestens 95% umgesetzt worden ist. Durch dieses Verfahren wird gewährleistet, dass die B Blöcke frei von Monomeren der Zusammensetzung A sind, und dass die A Blöcke weniger als 10%, bevorzugt weniger als 5% der Gesamtmenge der Monomere der Zusammensetzung B enthalten. Die Blockgrenzen befinden sich nach dieser Definition an der jeweiligen Stelle der Kette, an der sich die erste Wiederholungseinheit der zugegebenen Monomermischung - in diesem Beispiel der Mischung A - befindet. Ein nur 95%iger Umsatz hat den Vorteil, dass die verbleibenden Monomere, vor allem im Falle von Acrylaten, einen effizienteren Übergang zur Polymerisation einer zweiten Monomerzusammensetzung, vor allem von Methacrylaten, ermöglichen. Auf diese Weise wird die Ausbeute von Blockcopolymeren deutlich verbessert.

Im erfindungsgemäßen Verfahren wird der Initiator zur Polymerisation der Monomermischung B zeitversetzt in zwei Chargen zur Polymerlösung gegeben. Mit der ersten Charge wird die Polymerisation gestartet und durch eine insgesamt längere Polymerisationszeit werden Polymerketten mit relativ hohem Molekulargewicht gebildet. Nach einer Zeit t₁, die je nach angestrebten Molekulargewicht variieren kann, mindestens jedoch 30 min, bevorzugt mindestens 60 min beträgt, wird die zweite Monomercharge zugegeben. Durch diese zweite Initiierung werden zunächst Polymere der Zusammensetzung B mit relativ niedrigem Molekulargewicht gebildet. Dabei macht die erste Initiatorcharge 10% bis 90%, bevorzugt 25% bis 75% der gesamten Initiatormenge aus. Alternativ ist auch ein Verfahren möglich, bei dem der Initiator in mehr als zwei Chargen zugegeben wird. Auf diese Weise werden Makroinitiatoren der Zusammensetzung B für den sequentielllen Aufbau von Blockcopolymeren der Zusammensetzung ABA gebildet. Diese Makroinitiatoren weisen in sich eine Molekulargewichtsverteilung mit einem Polydispersitätsindex zwischen 1,8 und 3,0, bevorzugt zwischen 1,9 und 2,5 auf.
Nach der Polymerisationszeit t₂ wird schließlich die Monomermischung A zugegeben. Die Polymerisationszeit t₂ beträgt mindestens weitere 60 min, bevorzugt mindestens 90 min. Durch den Charakter der ATRP stehen zu diesem Zeitpunkt beide vorher Initiierten Polymerspezies der Zusammensetzung B zur Polymerisation zur Verfügung und die Polymerblöcke A werden unter den bereits bekannten Voraussetzungen der ATRP aufgebaut. Diese Segmente der Polymerketten zeigen entsprechend in sich eine enge Molekulargewichtsverteilung. Dabei können im Fall von Pentablockpolymeren auch Blöcke vom Typ C oder D entsprechend aufgebaut werden.

Ein weiterer Vorteil der vorliegenden Erfindung ist die weiterhin verhinderte Rekombination. So kann auch mit diesem Verfahren die Bildung von besonders hohen Molekulargewichten unterdrückt werden. Solche Polymerbestandteile würden überproportional zu einer Steigerung der Lösungs- bzw. Schmelzviskosität beitragen. Vielmehr besteht das erfindungsgemäß hergestellte bimodal verteilte Polymer aus zwei in sich jeweils eng und monomodal verteilten Polymerspezies analogen Aufbaus. Der Polydispersitätsindex der gesamten erfindungsgemäß hergestellten Polymere ist dennoch größer 1,8.
Erfindungsgemäß wird als Maß für die Uneinheitlichkeit der Molekulargewichtsverteilung der Polydispersitätsindex als Quotient aus dem Gewichts- und dem Zahlenmittel der Molekulargewichte angegeben. Die Molekulargewichte werden mittels Gelpermeationschromatographie (GPC) gegen einen PMMA-Standard bestimmt.

Eine weitere Ausführungsform der vorliegenden Erfindung ist die gezielte Funktionalisierung der A- bzw. D-Blöcke in ABA, CABAC, ACBCA bzw. CDBDC Blockcopolymeren mit bimodaler Molekulargewichstverteilung. Gelöst wurde die Aufgabe durch die Herstellung von Blockcopolymeren mit mindestens 1 und maximal 4 funktionellen Gruppen in den einzelnen A- bzw. D-Blöcke, dadurch, dass Monomermischung A bzw. D aus einer Zusammensetzung enthaltend funktionalisierte (Meth)acrylate und Monomere ausgewählt aus der Gruppe der (Meth)acrylate oder deren Mischungen, die keine zusätzliche funktionelle Gruppe aufweisen, besteht. Die Monomermischungen B und C dagegen bestehen ausschließlich aus (Meth)acrylaten oder deren Mischungen, die keine zusätzliche funktionelle Gruppe aufweisen. Dabei können diese Zusammensetzungen identisch oder unterschiedlich zu dem Anteil der Monomermischung A sein, der keine funktionellen Gruppen aufweist.
Es wurde insbesondere gefunden, dass auch erfindungsgemäße Blockcopolymere mit mindestens 1 und maximal 2 funktionellen Gruppen in den einzelnen A-Blöcken dargestellt werden können.
Es können sowohl den Copolymeren des Blockes A, als auch den Copolymeren des Blockes B bzw. C 0-50 Gew.-% mittels ATRP polymerisierbare Monomere, die nicht zu der Gruppe der (Meth)acrylate gezählt werden, zugegeben werden.
Bei den C-Blöcken handelt es sich um Polymerblöcke, die der Grundzusammensetzung der A-Blöcke entsprechen, aber keine funktionellen Gruppen enthaltene Monomere aufweisen. Bei D-Blöcken handelt es sich um Polymerblöcke, die zum einen in der Grundzusammensetzung dem B-Block und nicht den C-Blöcken entsprechen und zum anderen funktionelle Bausteine enthalten.

Gegenüber den im Stand der Technik beschriebenen Verfahren mit z.B. silylterminierten Bindemitteln in der Zusammensetzung kann auch in den erfindungsgemäßen Produkten mit einem relevant höheren Funktionalisierungsgrad eine bessere Vernetzbarkeit erhalten werden. Zusätzlich wird durch eine Verteilung der reaktiven Gruppen auf die Endsegmente - hier die Blöcke A - eine zu engmaschige Vernetzung ausgeschlossen. Mit Endsegmenten ist ein Kettenabschnitt gemeint, der jeweils maximal 25 Massen-% und bevorzugt maximal 10 Massen-% und ganz besonders bevorzugt maximal 5 Massen-% der gesamten Polymerkette ausmacht.

Die besagten funtionellen Gruppen, die in den A-Blöcken enthalten sind, sind nur durch die Auswahl mittels ATRP copolymerisierbarer Monomere eingeschränkt. Die folgende Auflistung dient nur als Beispiel zur Verdeutlichung der Erfindung und dient nicht dazu, die Erfindung in irgendeiner Weise einzuschränken.
So können die A-Blöcke OH-Gruppen aufweisen. Hydroxyfunktionalisierte (Meth)acrylate, die dazu geeignet sind, sind bevorzugt Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl(meth)acrylat, 2,5-Dimethyl-1,6-hexandiolmono(meth)acrylat, besonders bevorzugt 2-Hydroxyethylmethacrylat.
Amingruppen sind beispielsweise durch die Copolymerisation von 2-Dimethylaminoethyl-methacrylat (DMAEMA), 2-Diethylaminoethyl-methacrylat (DEAEMA), 2-*tert*-butylaminoethyl-methacrylat (t-BAEMA), 2-Dimethylaminoethylacrylat (DMAEA), 2-Diethylaminoethyl-acrylat (DEAEA), 2-*tert*-butylaminoethyl-acrylat (t-BAEA), 3-Dimethylaminopropyl-methacrylamid (DMAPMA) und 3-Dimethylaminopropyl-acrylamid (DMAPA) darstellbar.
Polymere mit Allylgruppen können zum Beispiel durch die Copolymerisation von Allyl(meth)acrylat realisiert werden. Polymere mit Epoxygruppen durch die Copolymerisation von Glycidyl(meth)acrylat. Säuregruppen können durch die Copolymerisation von tert-Butyl(meth)acrylat und anschließende Verseifung bzw. thermische Abspaltung von Isobuten realisiert werden.
Beispiele für (Meth)Acrylat gebundene Silylreste seien -SiCl₃, -SiMeCl₂, -SiMe₂Cl,-Si(OMe)₃, -SiMe(OMe)₂, -SiMe₂(OMe), -Si(OPh)₃, -SiMe(OPh)₂, -SiMe₂(OPh), -Si(OEt)₃, -SiMe(OEt)₂, -SiMe₂(OEt), -Si(OPr)₃, -SiMe(OPr)₂, -SiMe₂(OPr), -SiEt(OMe)₂,-SiEtMe(OMe), -SiEt₂(OMe), -SiPh(OMe)₂, -SiPhMe(OMe), -SiPh₂(OMe),-SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen. Ein kommerziell verfügbares Monomer ist zum Beispiel Dynasylan^{Ⓡ} MEMO der Firma Evonik-Degussa GmbH. Dabei handelt es sich um 3-Methacryloxypropyltrimethoxysilan.
Vorteilhaft ist, dass die zur Funktionalisierung eingesetzten Monomere polymerisiert werden, ohne dass es zu Vernetzungsreaktionen kommt.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden. Monomere die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.
Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan; Biodiesel; aber auch Weichmacher wie niedrigmolekulare Polypropylenglycole oder Phthalate.
Die Blockcopolymere der Zusammensetzung ABA werden mittels sequentieller Polymerisation dargestellt.
Neben der Lösungspolymerisation kann die ATRP auch als Emulsions-, Miniemulsions-, Mikroemulsions-, Suspension- oder Substanzpolymerisation durchgeführt werden.
Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.
Vorzugsweise weist das erfindungsgemäße Polymer ein zahlenmittleres Molekulargewicht zwischen 5000 g/mol und 100000 g/mol, besonders bevorzugt zwischen 7500 g/mol und 50000 g/mol und ganz besonders bevorzugt ≤ 30000 g/mol auf.
Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂₎ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃; XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅,-o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder lod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.
Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.
Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll.
Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.
Diese Liganden können in situ mit den Metallverbindungen Koordinationsverbindungen bilden oder sie können zunächst als Koordinationsverbindungen hergestellt werden und anschließend in die Reaktionsmischung gegeben werden.
Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll. Nach erfolgter ATRP kann die Übergangsmetallverbindung mittels Zugabe einer geeigneten Schwefelverbindung gefällt werden. Mittels Zugabe z.B. von Mercaptanen wird das kettenendständige Halogenatom unter Freisetzung eines Halogenwasserstoffs substituiert. Der Halogenwasserstoff - wie z.B. HBr - protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler wie Ethylhexylmercaptan oder n-Dodecylmercaptan.

Es ergibt sich ein breites Anwendungsfeld für diese Produkte. Die Auswahl der Anwendungsbeispiele ist nicht dazu geeignet, die Verwendung der erfindungsgemäßen Polymere einzuschränken. Die Beispiele sollen einzig dazu dienen, stichprobenartig die breite Einsatzmöglichkeit der beschriebenen Polymere darzustellen. Bevorzugt können Blockcopolymere mit reaktiven Gruppen der Zusammensetzung ABA, ACBCA, CABAC bzw. CDBDC als Präpolymere für eine feuchtigkeitshärtende Vernetzung eingesetzt werden. Die Präpolymere können mit beliebigen Polymeren vernetzt werden.
Die bevorzugten Anwendungen für die erfindungsgemäßen Blockcopolymeren der Zusammensetzung ABA, ACBCA, CDBDC oder CABAC mit ≤4 Silylgruppen in den einzelnen A-, bzw. D-Blöcken sind in Dichtmassen, Reaktivschmelzklebstoffen oder in Klebmassen zu finden. Insbesondere bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Weitere bevorzugte Anwendungsgebiete sind Dichtmassen für Bauanwendungen, Heißsiegelanwendungen oder Montagekleber.

Die möglichen Anwendungen für erfindungsgemäß hergestellte Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung, die untere anderem aus Acrylatpartikeln und Polyurethanen besteht, beschrieben. Ein erfindungsgemäßes Polymer führte in einer entsprechenden Formulierung zu einer Verbesserung der Verarbeitungs- und Vernetzungseigenschaften. Denkbare Anwendungen sind zum Beispiel Pulverlackformulierungen.

Mit den neuen Bindemitteln lassen sich vernetzbare einkomponentige und zweikomponentige Elastomere zum Beispiel für eine der aufgeführten Anwendungen herstellen. Übliche weitere Bestandteile einer Formulierung sind das Bindemittel, Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw.
Zur Reduktion der Viskosität können Lösungsmittel eingesetzt werden, z. B. aromatische Kohlenwasserstoffe wie Toluol, Xylol, usw., Ester wie Ethylacetat, Butylacetat, Amylacetat, Cellosolveacetat, usw., Ketone wie Methylethylketon, Methylisobutylketon, Diisobutylketon, usw. Das Lösungsmittel kann bereits im Verlauf der radikalischen Polymerisation zugegeben werden.
Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z. B. DYNASIL A und 40), als Vernetzungskatalysatoren verwendet werden. Daneben auch Titanate (z. B. Tetrabutyltitanat, Tetrapropyltitanat, usw.), Zirkonate (z. B. Tetrabutylzirkonat, usw.), Amine (z. B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen.

Ein Vorteil der Blockcopolymere ist die Farblosigkeit sowie die Geruchlosigkeit des hergestellten Produkts.

Ein weiterer Vorteil der vorliegenden Erfindung ist zudem eine beschränkte Zahl von Funktionalitäten in den jeweiligen funktionalisierten Polymerblöcken. Ein höherer Anteil funktioneller Gruppen im Bindemittel führt zu einer eventuellen vorzeitigen Vergelung oder zumindest zu einer zusätzlichen Erhöhung der Lösungs- bzw. Schmelzviskosität.

Bedingt durch die höhere Zahl reaktiver Gruppen im Kettenendsegment, ist eine Reaktion der Silylgruppen wahrscheinlicher und eine Vernetzung zu einem engmaschigen Elastomer läuft deutlich schneller ab. Eine gezielte Steuerung der Vernetzungsdichte bzw. der Eigenschaften des vernetzten Endprodukts wird durch eine Verteilung der Funktionalitäten in den Endsegmenten verbessert.
Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die zahlenmittleren bzw. gewichtsmittleren Molekulargewichte Mn bzw. Mw und der Polydispersitätsindex D = Mw/Mn als Maß für die Molekulargewichtsverteilungen werden durch Gelpermeations-Chromatographie (GPC) in Tetrahydrofuran gegenüber einem PMMA-Standard bestimmt.

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1a (genaue Bezeichnung und Mengenangabe in Tabelle 1), 120 mL Propylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 80 °C gerührt. Anschließend wird bei gleicher Temperatur eine Menge Initiator1 (siehe Tabelle 1) 1,4-Butandiol-di-(2-bromo-2-methylpropionat) (BDBIB, in 10 mL Propylacetat) zugegeben. Nach einer Reaktionszeit von zwei Stunden wird in die Reaktionslösung eine Menge Initiator2 (siehe Tabelle 1) 1,4-Butandiol-di-(2-bromo-2-methylpropionat) (BDBIB, in 10 mL Propylacetat) gegeben. Nach der Polymerisationszeit von zusätzlichen 1,5 Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird weitere zwei Stunden bei 80 °C gerührt und anschließend durch Zugabe von 3,0 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

### Beispiel 2

Analog dem Beispiel 1 werden die Monomere 1 b, 2b und 3b (genaue Bezeichnung und Mengenangabe in Tabelle 1) eingesetzt.

### Beispiel 3

Analog dem Beispiel 1 werden die Monomere 1 c, 2c und 3c (genaue Bezeichnung und Mengenangabe in Tabelle 1) eingesetzt. In der Vorlage werden 180 g Propylacetat eingesetzt.

### Beispiel 4

Analog dem Beispiel 1 werden die Monomere 1d, 2d und 3d (genaue Bezeichnung und Mengenangabe in Tabelle 1) eingesetzt.

### Beispiel 5

Analog dem Beispiel 1 werden die Monomere 1 e, 2e und 3e (genaue Bezeichnung und Mengenangabe in Tabelle 1) eingesetzt.

**Tabelle 1**

| Beispiel | 1 | 2 | 3 | 4 | 5 |
|---|---|---|---|---|---|
| Monomer 1 | 1a) n-BA | 1b) n-BA | 1c) n-BA | 1d) n-BA | 1e) n-BA |
| Menge | 120,4 g | 120,5 g | 200,6 g | 121,6 g | 121,4 g |
| Kupfer(I)oxid | 0,8 g | 0,8 g | 1,3 g | 2,4 g | 2,4 g |
| PMDETA | 2,0 g | 2,0 g | 3,3 g | 6,0 g | 6,0 g |
| Initiator1 | 1,01 g | 1,01 g | 0,85 g | 3,06 g | 2,36 g |
| Initiator2 | 1,01 g | 1,01 g | 2,52 g | 3,06 g | 4,13 g |
| Monomer 2 | 2a) n-BA | 2b) MMA | 2c) n-BA | 2d) n-BA | 2e) n-BA |
| Menge | 30,1 g | 30,2 g | 50,2 g | 30,3 g | 30,3 g |
| Monomer 3 | 3a) MEMO | 3b) MEMO | 3c) MEMO | 3d) AMA | 3e) HEMA |
| Menge | 6,2 g | 6,2 g | 10,4 g | 10,5 g | 9,9 g |
| Mₙ (1.Sufe) | 26500 | 28600 | 26500 | 11500 | 7500 |
| D | 2,15 | 1,98 | 2,15 | 1,95 | 3,14 |
| Mₙ (Endprodukt) | 31800 | 34800 | 31900 | 14600 | 11500 |
| D | 2,07 | 2,02 | 2,07 | 1,81 | 2,02 |

| | | | | | |
|---|---|---|---|---|---|
| MMA = Methylmethacrylat; n-BA = n-Butylacrylat, MEMO = Dynasylan MEMO (3-Methacryloxypropyltrimethoxysilan), AMA = Allylmethacrylat, HEMA = 2-Hydroxyethylmethacrylat | | | | | |

Die Molekulargewichtsverteilungen der ersten Polymerisationsstufen sind jeweils bimodal und weisen einen Molekularitätsindex D größer 1,8 auf. Die Endprodukte haben entsprechend große, wenn auch im Vergleich zu den reinen B-Blöcken kleinere Molekularitätsindizes. Dieser Effekt ergibt sich aus dem insgesamt höheren Molekulargewicht, zeigt jedoch auch, dass die Polymerisation der A-Blöcke kontrolliert abläuft und die Blöcke für sich eine enge Molekulargewichtsverteilung haben. Die Zunahme des Molekularitätsindex in Beispiel 2 auf eine hochmolekulare Schulter zurückzuführen. Diese ergibt sich aus Nebenreaktionen der Silylgruppen unter einer teilweise stattfindenden Kettendimerisierung.

Nach Entfernung des Lösungsmittels können die silyl-funktionalisierten Produkte durch Zugabe geeigneter Trocknungsmittel stabilisiert werden. Auf diese Weise lässt sich eine gute Lagerstabilität ohne weitere Molekulargewichtszunahme gewährleisten.

Die Übertragung der Ergebnisse auf Pentablockcopolymere der Zusammensetzung ACBCA bzw. CABAC kann analog erfolgen. Die Synthese solcher Copolymere mit enger Verteilung sind beispielsweise in der noch nicht offengelegten Patentanmeldung DE 102008002016 der gleichen Anmelder beschrieben.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1f (genaue Bezeichnung und Mengenangabe in Tabelle 2), 125 mL Propylacetat, 0,5 g Kupfer(I)oxid und 1,3 g N,N,N',N",N"-Pentamethyldiethylentriamin (PMDETA) vorgelegt. Die Lösung wird für 15 min. bei 80 °C gerührt. Anschließend wird bei gleicher Temperatur in 25 mL Propylacetat gelöster Initiator 1,4-Butandiol-di-(2-bromo-2-methylpropionat) (BDBIB, Menge siehe Tabelle 2) zugegeben. Nach der Polymerisationszeit von drei Stunden wird eine Probe zur Bestimmung des mittleren Molgewichts Mₙ (mittels SEC) entnommen und eine Mischung aus Monomer 2f und Monomer 3f (genaue Bezeichnung und Mengenangabe in Tabelle 2) zugegeben. Die Mischung wird bis zu einem erwarteten Umsatz von mindestens 95% polymerisiert und durch Zugabe von 2,1 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Vergleichsbeispiel 2

Analog dem Vergleichsbeispiel 1 werden die Monomere 1g, 2g und 3g (genaue Bezeichnung und Mengenangabe in Tabelle 2) eingesetzt.

### Vergleichsbeispiel 3

Analog dem Vergleichsbeispiel 1 werden die Monomere 1 h, 2h und 3h (genaue Bezeichnung und Mengenangabe in Tabelle 2) eingesetzt.

**Tabelle 2**

| Vergleichsbeispiel | 1 | 2 | 3 |
|---|---|---|---|
| Monomer 1 | 1f) MMA | 1g) n-BA | 1h) n-BA |
| Menge | 81,0 g | 79,6 g | 79,6 g |
| Monomer 2 | 2f) MMA | 2g) MMA | 2h) n-BA |
| Menge | 19,9 g | 19,9 g | 20,0 g |
| Monomer 3 | 3f) MEMO | 3g) MEMO | 3h) MEMO |
| Menge | 4,8 g | 4,8 g | 4,8 g |
| Initiatormenge | 1,25 g | 1,25 g | 1,25 g |
| Mₙ (1.Sufe) | 21600 | 17800 | 18100 |
| D | 1,21 | 1,22 | 1,28 |
| Mₙ (Endprodukt) | 26800 | 20300 | 22500 |
| D | 1,31 | 1,36 | 1,38 |

Die Vergleichspiele zeigen, dass bei konventioneller Initiatorzugabe in einer Charge Polymere mit relativ eng verteilten Innenblöcken und Molekularitätsindizes kleiner 1,4 gebildet werden.

## Patentansprüche

1. Verfahren zur Herstellung von Blockcopolymeren durch eine sequentiell durchgeführte atom transfer radical polymerization (ATRP),
**dadurch gekennzeichnet,**
**dass** ein bifunktioneller Initiator in zwei Chargen zur Polymerisationslösung zugegeben wird, und dass das Blockcopolymer der Zusammensetzung ABA insgesamt eine Molekulargewichtsverteilung mit einem Polydispersitätsindex größer 1,8 aufweist.

2. Verfahren zur Herstellung von Blockcopolymeren der Zusammensetzung ABA gemäß Anspruch 1, **dadurch gekennzeichnet, dass** es sich bei Block A, um ein Copolymer mit einer monomodalen Molekulargewichtsverteilung handelt, dass es sich bei Block B, um ein Copolymer mit einer bimodalen Molkulargewichtsverteilung mit einem Polydispersitätsindex größer 1,8 handelt, wobei die Monomere (Meth)acrylaten oder deren Mischungen sein können.

3. Verfahren zur Herstellung von Blockcopolymeren der Zusammensetzung ACBCA oder CABAC gemäß Anspruch 1 oder 2, **dadurch gekennzeichnet,**
**dass** es sich bei den Blöcken A und C jeweils um einen Copolymerblock mit einer monomodalen Molekulargewichtsverteilung handelt, wobei die Monomere aus (Meth)acrylaten oder deren Mischungen sein können und in Block C keine Monomere mit weiteren funktionellen Gruppen eingesetzt werden.

4. Verfahren zur Herstellung von Blockcopolymeren gemäß einem der Ansprüche 1 bis 3, **dadurch gekennzeichnet,**
**dass** der Initiator in zwei Chargen zeitlich voneinander getrennt zugegeben wird, und dass die erste Initiatorcharge 10% bis 90%, bevorzugt 25% bis 75% der gesamten Initiatormenge ausmacht.

5. Verfahren zur Herstellung von Blockcopolymeren gemäß Anspruch 4, **dadurch gekennzeichnet, dass** die zweite Initiatorcharge mindestens 30 min, bevorzugt mindestens 60 min nach der ersten Initiatorcharge und mindestens 60 min, bevorzugt mindestens 90 min vor der Zugabe der Monomermischung B bzw. C zur Polymerisationslösung gegeben wird.

6. Verfahren zur Herstellung von Blockcopolymeren gemäß einem der Ansprüche 1 bis 5, **dadurch gekennzeichnet, dass** die einzelnen A-Blöcke der Blockcopolymere eine Zusammensetzung mit mindestens 1 und maximal 4, bevorzugt mindestens 1 und maximal 2 funktionellen Gruppen aufweisen.

7. Verfahren zur Herstellung von Blockcopolymeren gemäß Anspruch 6, **dadurch gekennzeichnet, dass** in die A-Blöcke Monomere, die eine ungesättigte, radikalisch polymerisierbare Gruppe und eine zweite funktionelle Gruppe, ausgewählt aus Hydroxy-, Amin-, Allyl-, Silyl-, oder Epoxygruppen, einpolymerisiert werden.

8. Verfahren zur Herstellung von Blockcopolymeren gemäß Anspruch 2 oder 3,
**dadurch gekennzeichnet, dass** die einzelnen A-Blöcke jeweils weniger als 25%, bevorzugt jeweils weniger als 10% des Gesamtgewichts des ABA-Blockcopolymers ausmachen.

9. Verfahren zur Herstellung von Blockcopolymeren gemäß Anspruch 1, **dadurch gekennzeichnet, dass** einer oder mehrere der Blöcke zusätzlich Vinylester, Vinylether, Fumarate, Maleate, Styrole, Acrylonitrile oder andere mittels ATRP polymerisierbare Monomere enthält.

10. Verfahren zur Herstellung von Blockcopolymeren gemäß Anspruch 1, **dadurch gekennzeichnet, dass** das Blockcopolymer ein zahlenmittleres Molekulargewicht zwischen 5000 g/mol und 100000 g/mol, bevorzugt zwischen 7500 g/mol und 50000 g/mol aufweist.

11. Verfahren zur Herstellung von Blockcopolymeren gemäß Anspruch 1, **dadurch gekennzeichnet, dass** der ATRP-Katalysator nach der Polymerisation mittels Zugabe eines Mercaptans oder einer eine Thiolgruppe aufweisende Verbindung gefällt und mittels Filtration von der Polymerlösung abgetrennt wird.

12. ABA-Triblockcopolymer enthaltend Block A mit einer monomodalen Molkulargewichtsverteilung, sowie Block B mit einer biomodalen Molekulargewichtsverteilung mit einem Polydispersitätsindex größer 1,8 handelt, wobei die Monomere ausgewählt werden aus (Meth)acrylaten oder deren Mischungen, erhältlich durch ein Verfahren nach einem der Ansprüche 2 bis 11.

13. Pentablockcopolymer der Zusammensetzung ACBCA oder CABAC hergestellt gemäß Anspruch 3, **dadurch gekennzeichnet, dass** es sich bei den Blöcken A und C, jeweils um ein Copolymer mit einer monomodalen Molkulargewichtsverteilung handelt enthaltend Monomere ausgewählt aus der Gruppe der (Meth)acrylate oder deren Mischungen, dass es sich bei Block B, um ein Copolymer mit einer bimodalen Molkulargewichtsverteilung mit einem Polydispersitätsindex größer 1,8 handelt enthaltend (Meth)acrylate oder deren Mischungen, und
dass das Blockcopolymer insgesamt einen Polydispersitätsindex größer 1,8 aufweist.

14. Blockcopolymer gemäß mindestens einem der Ansprüche 12 oder 13, **dadurch gekennzeichnet, dass** das Blockcopolymer insgesamt einen Polydispersitätsindex größer 1,8 aufweist, und das der Polydispersitätsindex des Blockcopolymers kleiner ist als der des Blockes B.

15. Verwendung eines Polymeren gemäß den Ansprüchen 12 bis 14 zur Herstellung von Schmelzklebstoffen, fließfähigen Klebstoffen, Haftklebstoffen, elastischen Dichtungsmassen, Beschichtungsmitteln oder von Schaumstoffvorläufem.

16. Verwendung von Blockcopolymeren gemäß Anspruch 12 bis 14 zur Herstellung von Heißsiegelmassen.

17. Verwendung von Blockcopolymeren nach einem der Ansprüche 12 bis 14 in vernetzbaren Zusammensetzungen, wobei das Blockcopolymer reaktive funktionelle Gruppen aufweist.

## Claims

1. Process for preparing block copolymers by a sequentially implemented atom transfer radical polymerization (ATRP),
**characterized**
**in that** a bifunctional initiator is added to the polymerization solution in two batches, and in that the block copolymer, of composition ABA, has an overall molecular weight distribution with a polydispersity index of greater than 1.8.

2. Process for preparing block copolymers of the composition ABA according to Claim 1, **characterized in that** block A is a copolymer having a monomodal molecular weight distribution, and **in that** block B is a copolymer having a bimodal molecular weight distribution with a polydispersity index of greater than 1.8, it being possible for the monomers to be (meth)acrylates or mixtures thereof.

3. Process for preparing block copolymers of composition ACBCA or CABAC according to Claim 1 or 2, **characterized in that** blocks A and C are each a copolymer block having a monomodal molecular weight distribution, it being possible for the monomers to be from (meth)acrylates or mixtures thereof, and there being no monomers with further functional groups used in block C.

4. Process for preparing block copolymers according to any of Claims 1 to 3, **characterized in that** the initiator is added in two batches separated by a time stagger, and **in that** the first initiator batch accounts for 10% to 90%, preferably 25% to 75%, of the overall amount of initiator.

5. Process for preparing block copolymers according to Claim 4, **characterized in that** the second initiator batch is added at least 30 minutes, preferably at least 60 minutes, after the first initiator batch and at least 60 minutes, preferably at least 90 minutes, before the addition of the monomer mixture B and/or C to the polymerization solution.

6. Process for preparing block copolymers according to any of Claims 1 to 5, **characterized in that** the individual A blocks of the block copolymers have a composition with at least 1 and not more than 4, preferably at least 1 and not more than 2, functional groups.

7. Process for preparing block copolymers according to Claim 6, **characterized in that** monomers which have an unsaturated, free-radically polymerizable group and a second functional group selected from hydroxyl, amine, allyl, silyl or epoxy groups are copolymerized into the A blocks.

8. Process for preparing block copolymers according to Claim 2 or 3, **characterized in that** the individual A blocks each make up less than 25%, preferably each less than 10%, of the total weight of the ABA block copolymer.

9. Process for preparing block copolymers according to Claim 1, **characterized in that** one or more of the blocks additionally comprises vinyl esters, vinyl ethers, fumarates, maleates, styrenes, acrylonitriles or other monomers which are polymerizable by means of ATRP.

10. Process for preparing block copolymers according to Claim 1, **characterized in that** the block copolymer has a number-average molecular weight of between 5000 g/mol and 100 000 g/mol, preferably between 7500 g/mol and 50 000 g/mol.

11. Process for preparing block copolymers according to Claim 1, **characterized in that** the ATRP catalyst is precipitated after the polymerization by addition of a mercaptan or of a compound containing a thiol group and is separated off from the polymer solution by means of filtration.

12. ABA triblock copolymer comprising block A, having a monomodal molecular weight distribution, and block B, having a bimodal molecular weight distribution with a polydispersity index of greater than 1.8, the monomers being selected from (meth)acrylates or mixtures thereof, obtainable by a process according to any of Claims 2 to 11.

13. Pentablock copolymer of the composition ACBCA or CABAC prepared according to Claim 3, **characterized in that** the blocks A and C are each a copolymer having a monomodal molecular weight distribution comprising monomers selected from the group of (meth)acrylates or mixtures thereof, **in that** block B is a copolymer having a bimodal molecular weight distribution with a polydispersity index of greater than 1.8 comprising (meth)acrylates or mixtures thereof, and
**in that** the block copolymer has an overall polydispersity index of greater than 1.8.

14. Block copolymer according to at least one of Claims 12 and 13, **characterized in that** the block copolymer has an overall polydispersity index of greater than 1.8, and **in that** the polydispersity index of the block copolymer is less than that of block B.

15. Use of a polymer according to any of Claims 12 to 14 for producing hotmelt adhesives, fluid adhesives, pressure-sensitive adhesives, elastic sealants, coating materials or foam precursors.

16. Use of block copolymers according to any of Claims 12 to 14 for producing heat-sealing compositions.

17. Use of block copolymers according to any of Claims 12 to 14 in crosslinkable compositions, the block copolymer having reactive functional groups.

## Revendications

1. Procédé pour la préparation de copolymères à blocs par une polymérisation radicalaire à transfert atomique (atom transfer radical polymerization - ATRP) réalisée de manière séquentielle, **caractérisé en ce qu'**on ajoute un initiateur difonctionnel en deux charges à la solution de polymérisation et **en ce que** le copolymère à blocs de composition ABA présente au total une répartition des poids moléculaires présentant un indice de polydispersité supérieur à 1,8.

2. Procédé pour la préparation de copolymères à blocs de composition ABA selon la revendication 1, **caractérisé en ce qu'**il s'agit, pour le bloc A, d'un copolymère présentant une répartition monomodale des poids moléculaires, **en ce qu'**il s'agit, pour le bloc B, d'un copolymère présentant une répartition bimodale des poids moléculaires, présentant un indice de polydispersité supérieur à 1,8, les monomères pouvant être des (méth)acrylates ou leurs mélanges.

3. Procédé pour la préparation de copolymères à blocs de composition ACBCA ou CABAC selon la revendication 1 ou 2, **caractérisé en ce qu'**il s'agit, pour les blocs A et C, à chaque fois d'un bloc copolymère présentant une répartition monomodale des poids moléculaires, les monomères pouvant être des (méth)acrylates ou leurs mélanges et en n'utilisant pas, dans le bloc C, de monomères présentant d'autres groupes fonctionnels.

4. Procédé pour la préparation de copolymères à blocs selon l'une quelconque des revendications 1 à 3, **caractérisé en ce que** l'initiateur est ajouté en deux charges séparées l'une de l'autre dans le temps et **en ce que** la première charge d'initiateur représente 10% à 90%, de préférence 25% à 75% de la quantité totale d'initiateur.

5. Procédé pour la préparation de copolymères à blocs selon la revendication 4, **caractérisé en ce qu'**on ajoute la deuxième charge d'initiateur au moins 30 min, de préférence au moins 60 min après la première charge d'initiateur et au moins 60 min, de préférence au moins 90 min avant l'addition du mélange de monomères B ou, selon le cas, C à la solution de polymérisation.

6. Procédé pour la préparation de copolymères à blocs selon l'une quelconque des revendications 1 à 5, **caractérisé en ce que** les différents blocs A des copolymères à blocs présentent une composition présentant au moins 1 et au maximum 4, de préférence au moins 1 et au maximum 2 groupes fonctionnels.

7. Procédé pour la préparation de copolymères à blocs selon la revendication 6, **caractérisé en ce qu'**on copolymérise dans les blocs A des monomères qui présentent un groupe insaturé polymérisable par voie radicalaire et un deuxième groupe fonctionnel, choisi parmi les groupes hydroxy, amine, allyle, silyle ou époxy.

8. Procédé pour la préparation de copolymères à blocs selon la revendication 2 ou 3, **caractérisé en ce que** les différents blocs A représentent à chaque fois moins de 25%, de préférence à chaque fois moins de 10% du poids total du copolymère à blocs ABA.

9. Procédé pour la préparation de copolymères à blocs selon la revendication 1, **caractérisé en ce qu'**un ou plusieurs des blocs contiennent en outre des esters de vinyle, des vinyléthers, des fumarates, des maléates, des styrènes, des acrylonitriles ou d'autres monomères polymérisables par ATRP.

10. Procédé pour la préparation de copolymères à blocs selon la revendication 1, **caractérisé en ce que** le copolymère à blocs présente un poids moléculaire numérique moyen entre 5000 g/mole et 100 000 g/mole, de préférence entre 7500 g/mole et 50 000 g/mole.

11. Procédé pour la préparation de copolymères à blocs selon la revendication 1, **caractérisé en ce que** le catalyseur d'ATRP est précipité après la polymérisation par addition d'un mercaptan ou d'un composé présentant un groupe thiol et séparé par filtration de la solution polymère.

12. Copolymère à trois blocs d'ABA contenant un bloc A présentant une répartition monomodale des poids moléculaires, ainsi qu'un bloc B présentant une répartition bimodale des poids moléculaires présentant un indice de polydispersité supérieur à 1,8, les monomères étant choisis parmi les (méth)acrylates ou leurs mélanges, pouvant être obtenu par un procédé selon l'une quelconque des revendications 2 à 11.

13. Copolymère à cinq blocs de composition ACBCA ou CABAC, préparé selon la revendication 3, **caractérisé en ce qu'**il s'agit, pour les blocs A et C, à chaque fois d'un copolymère présentant une répartition monomodale des poids moléculaires, contenant des monomères choisis dans le groupe des (méth)acrylates ou leurs mélanges, **en ce qu'**il s'agit, pour le bloc B, d'un copolymère présentant une répartition bimodale des poids moléculaires, présentant un indice de polydispersité supérieur à 1,8, contenant des (méth)acrylates ou leurs mélanges, et **en ce que** le copolymère à blocs présente, au total, un indice de polydispersité supérieur à 1,8.

14. Copolymère à blocs selon au moins l'une quelconque des revendications 12 ou 13, **caractérisé en ce que** le copolymère à blocs présente au total un indice de polydispersité supérieur à 1,8, et **en ce que** l'indice de polydispersité du copolymère à blocs est inférieur à celui du bloc B.

15. Utilisation d'un polymère selon les revendications 12 à 14 pour la préparation d'adhésifs en masse fondue, d'adhésifs aptes à l'écoulement, d'autoadhésifs, de masses d'étanchéité élastiques, d'agents de revêtement ou de précurseurs de mousse.

16. Utilisation de copolymères à blocs selon la revendication 12 à 14 pour la préparation de masses de scellement à chaud.

17. Utilisation de copolymères à blocs selon l'une quelconque des revendications 12 à 14 dans des compositions réticulables, le copolymère à blocs présentant des groupes fonctionnels réactifs.
